# EUROPEAN PATENT APPLICATION

(11) **EP 1 667 012 A2**
(43) Date of publication of application: **07.06.2006**
(21) Application number: 05257278.1
(22) Date of filing: 26.11.2005
(51) Int. Cl.: G06F 3/048

(54) **Data processing devices and systems with enhanced user interfaces**

(30) Priority: 03.12.2004 US 633218 P; 18.02.2005 US 61174
(71) Applicant: Picsel (Research) Ltd., Glasgow G51 4BP (GB)
(72) Inventor: Anwar, Majid, Glasgow G46 6SF (GB); Jenson, Scott A., Edina Minnesota 55424 (US); McGinley, Jack, Glasgow G66 4RB (GB); Clewett, James, Nottingham NG7 7LX (GB)
(74) Representative: Cooper, John

(57) **Abstract**

Data processing device including a user interface having a menu system, navigation module, and reveal process for enabling a user to interact with the data processing device. The device comprises a display, a direction control, and a graphical user interface. A menu system provides a first plurality of primary menu items to a display, each of the primary menu items having a visual field on the display. A navigation module enables a user to navigate the menu system using the direction control. A reveal process displays in at least one of the visual fields a first plurality of secondary menu items associated with a first of the plurality of primary menu items, in response to the user navigating to the first of the plurality of primary menu items, while continuing to display a remainder of the first plurality of primary menu items.

## Description

### Field of the Invention

The present invention relates to data processing devices and user interfaces for operating the same.

### Background

Designing user interfaces for mobile telephones and other small data processing devices presents unique challenges in view of the limited display screen area, the limited number of controls that can be accommodated on such devices and the need for quick, simple and intuitive device operation. Mobile phones offer a significant degree of functionality (e.g. managing contacts, creating and sending messages, personalizing phone settings and setting alarms). The design of the mobile phone user interfaces substantially determines the ease with which a user can navigate the functions and information contained in their mobile phone.

Example mobile telephone user interfaces include the basic five-way rocker user interface, the WINDOWS SMARTPHONE available from Microsoft Corporation of Redmond, WA, and NOKIA SERIES 60 available from Nokia of Finland. These user interfaces suffer from limited usability from users having difficulty locating desired functionality. In addition, users face confusion with respect to button functionality. The function of buttons on these interfaces changes significantly depending on the context in which the buttons are pressed.

In addition, the SMARTPHONE and SERIES 60™ rely heavily on the use of softkeys. Softkeys are context-sensitive, multi-function controls, usually located immediately below the display. While softkeys provide additional functionality to users, they occupy valuable screen area on displays where space is at a premium.

### Summary

One of the challenges in mobile telephone user interface design is to provide a user interface that is intuitive, easy to learn, behaves in a consistent, predictable manner, and makes the best use of limited display space. A user interface needs to provide a sufficient number of controls to manage the inherent complexity of the telephone whilst ensuring that there are not too many controls or options available to a user at any one time, thereby causing confusion. Thus, aspects of the invention aim to provide a data processing device having a more intuitive and useful user interface to mobile phone and other small computing device users.

In one aspect, the invention relates to a data processing device which includes a display, a direction control and a graphical user interface. The graphical user interface includes a menu system for providing a first plurality of primary menu items to a display.
The primary menu item have assigned visual fields on the display. The user interface also includes a navigation module for enabling a user to navigate the menu system using the direction control. In addition, the user interface has a reveal process for displaying a first plurality of secondary menu items associated with a first of the plurality of primary menu items in at least one of the visual fields. The user interface displays the secondary menu items in response to the user navigating to the first of the plurality of primary menu items. At the same time, the user interface continues to display a remainder of the first plurality of primary menu items. In various embodiments, the data processing device can be one of the following: a telephone, mobile telephone, cordless telephone, personal digital assistant, palmtop computer, digital still or video camera, media player, television, satellite television terminal, cable television terminal, in-car information system, in-car entertainment system, printer, scanner, facsimile machine and data storage device.

In one embodiment, the secondary menu items are shortcut items, such as navigational or functional shortcuts. The display of secondary menu items may also be dependent on the status of the data processing. In one embodiment, the status includes the presence or absence of a peripheral or a network connection.

In one embodiment, the data processing device user interface also includes a highlighting process for visually indicating to a user the successful navigation to a menu item. The visual indications may include one or more of scaling and/or expanding the visual field corresponding to the menu item and scaling the content, including text and graphics, within the visual field. In relation to highlighting a secondary menu item, the data processing device user interface in one embodiment provides additional information about the secondary menu item using a double reveal process.

The data processing device may also includes a select control and a select process for selecting a highlighted primary menu item or secondary menu item. Selecting a primary menu item or secondary menu item may initiate the performance of a function or it may lead to navigation within the menu system. Another feature included in some embodiments provides a zoom transition in response to the selection of a menu item. The zoom transition scales a selection and at least partially replaces other menu items with new menu items. In another embodiment, the data processing device has a deselect control and deselect process. The select control provides navigation downwards through a plurality of levels of menu items of the menu system and the deselect control provides navigation upwards through the plurality of levels of menu items. In a further embodiment, the select control and deselect controls provide zoom-in and zoom-out functions, respectively in relation to content available in the menu system.

The direction control, in one embodiment includes a four-way rocker switch with actuators corresponding to up, down, left, and right, as well as a select control located among the actuators. The data processing device may also include a dedicated deselect control. The data processing device may include a visual indication, such as a dye, paint, pigment, or topographical feature indicating a functional link to the select control. In an alternative embodiment, the select and deselect controls are disposed adjacent to each other on the data processing device and a plurality of directional switches, forming the direction control are substantially circumferentially disposed around the select and deselect controls.

In further embodiments, the data processing device includes a multimedia player. The user interface, in such embodiments, can be authored as one or more multimedia works, each having multiple multimedia segments. The data processing device then executes the user interface through the multimedia player.

### Brief Description of the Figures

Embodiments of the invention will now be described, by way of example only, with reference to the accompanying drawings, in which:
Figure 1 is a conceptual block diagram of a data processing device including a user interface according to one illustrative embodiment of the invention;
Figures 2A and 2B are top view of illustrative data processing device input devices according to an illustrative embodiment of the invention;
Figure 3 is a conceptual block diagram of a menu according to one illustrative embodiment of the invention;
Figures 4 to 6 illustrate embodiments of menu navigation, menu item selection, menu item highlighting, and menu item "reveal" techniques in accordance with various aspects of the invention;
Figure 7 is a diagrammatic illustration of an embodiment of an animated zoom transition in accordance with a further aspect of the invention;
Figure 8 is a diagrammatic illustration of a further embodiment of an animated zoom transition in accordance with a further aspect of the invention;
Figures 9 to 11 illustrate examples of displays employing the zoom transitions of Figures 7 and 8 according to an illustrative embodiment of the invention;
Figure 12 is a diagrammatic illustration of an embodiment of a further display zoom function in accordance with a further aspect of the invention;
Figure 13 illustrates the consistent use of a zoom metaphor through a menu hierarchy and data content according to an illustrative embodiment of the invention; and
Figures 14 and 15 illustrate examples of a "z-order" highlighting technique in accordance with an illustrative embodiment of the invention.

### Description Of an Illustrative Embodiment

A user of a data processing device typically interacts with the device through hardware input devices and by receiving sensory output such as audible sounds or visual displays via a display screen or a speaker. Internal to the data processing device, the interaction is governed by a user interface that translates input received from the input devices and that generates output in response.

### Data Processing Device

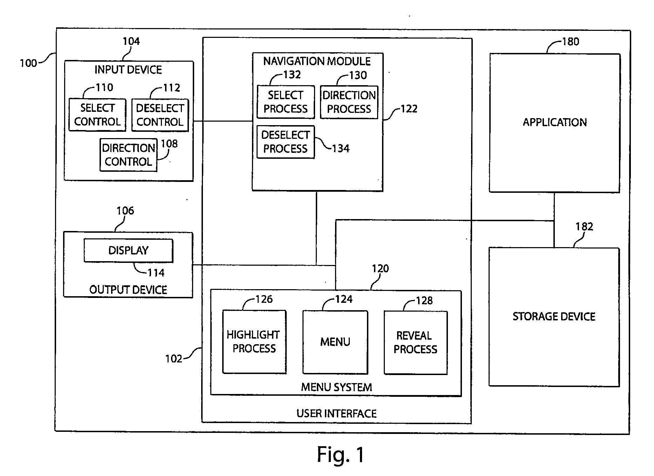

Figure 1 is a conceptual block diagram of a data processing device 100 including a user interface 102 according to one embodiment of the invention. In this illustrative embodiment, the data processing device 100 is a mobile telephone. The data processing device 100 includes an input device 104 and an output device 106. The input device 104 receives input from a user and passes it to the user interface 102 for processing. The output device 106 receives output from the user interface 102 and presents it to the user.

In other embodiments, the data processing device 100 may be, for example and without limitation, a telephone, cordless telephone, personal digital assistant, palmtop computer, digital still or video camera, media player, television, satellite television terminal, cable television terminal, in-car information system, in-car entertainment system, printer, scanner, facsimile machine and data storage device. The features and advantages described herein with respect to the mobile telephone data processing device 100, can also be implemented in any of the aforementioned devices.

The input device 104 enables a user to provide input to the data processing device 100. The input device 104 includes a direction control 108 for navigating between items visible on the output device 106. The direction control 108 includes four actuators for navigating up, down, left and right. The input device 104 also includes a select control 110 for selecting visible items on the output device 106. In addition, the input device 104 includes a deselect control 112 for deselecting previously selected items.

The output device 106 is display 114. The display 114 is a liquid crystal display providing color output. Alternative output devices 106 include greyscale and black and white plasma displays, cathode ray tubes, projection screens, and other suitable dynamic visual devices.

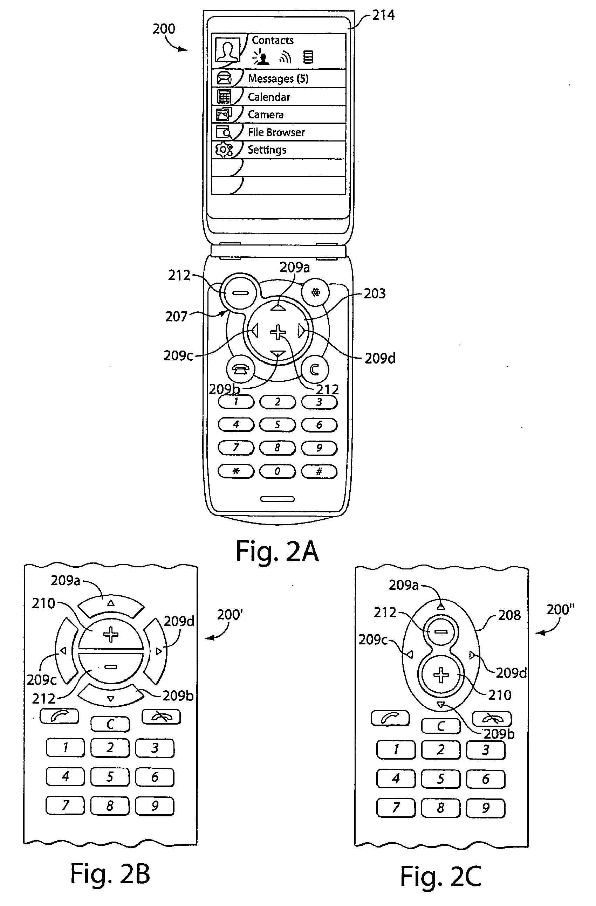

Figure 2A is a top view of an illustrative embodiment of a mobile phone data processing device 200 according to an illustrative embodiment of the invention. The data processing device 200 includes a display 214 as an output device 106. The display 214 is a color liquid crystal display. With respect to the input device 104, the data processing device 200 includes a five-way rocker switch 203. The peripheral actuators 209a-209d of the five-way rocker switch 203 serve as the direction control 108. The central actuator 210 of the five-way rocker switch 203 serves as the select control 110. An additional actuator 212 serves as the deselect control 112. The relationship between the select control 110 and the deselect control 112 is indicated by a visual indication 207. The visual indication 207 is a graphical feature linking the controls 110 and 112. In alternative embodiments the visual indication 207 is a physical feature, such as a topographical feature on the data processing device 200.

Figure 2B is a top view of an alternative input device 104 configuration for a data processing device 200' according another illustrative embodiment of the invention. In the data processing device 200', the input device 104 includes four actuators 209a'-209d' serving as a direction control 108. Each actuator 209a'-209d' corresponds to a direction, up, down, left, and right. The data processing device 200' includes a select control 210' and a deselect control 212' located within a generally circular region formed by the four actuators 209a-209d.

Figure 2C is a top view of another alternative input device 104 configuration for a data processing device 200". Similar to data processing device 200', in the data processing device 200", the input device 104 includes four actuators 209a"-209d" serving as a direction control 108. Each actuator 209a"-209d" corresponds to a direction, up, down, left, and right. The data processing device 200" includes a select control 210" and a deselect control 212" located within a generally elliptical region formed by the four actuators 209a"-209d".

The controls of the data processing device 200 may be provided by means other than the switches, keys or buttons described above. Equivalent functionality may be provided using other types of direction controls 108 (e.g. mouse, touchpad, touchscreen/stylus, four-way rocker switch, etc.) For touch screen implementation, select and deselect controls 110 and 112 are provided by virtual on screen buttons, or by gesture-based commands, e.g., symbolic stylus gestures mapped to interface commands, as disclosed in PCT Patent Publication WO01/79980.

### User Interface

Referring back to Figure 1, the data processing device 100 includes a user interface 102. The user interface receives input from the user, processes the input, and displays output based on the processed input. The user interface includes a menu system 120, and a navigation module 122. In brief, the menu system 120 determines, in part, the output displayed on the output device, and the navigation module 122 provides a user the ability to control such output using the input device 104. The menu system 120 and the navigation module 122 are implemented as software modules operating on a general or special purpose processor. In alternative embodiments, the menu system 120, the navigation module 122, or portions thereof are implemented in integrated circuits such as digital signal processors, application specific integrated circuits, programmable logic arrays or other suitable hardware format.

### Menu System

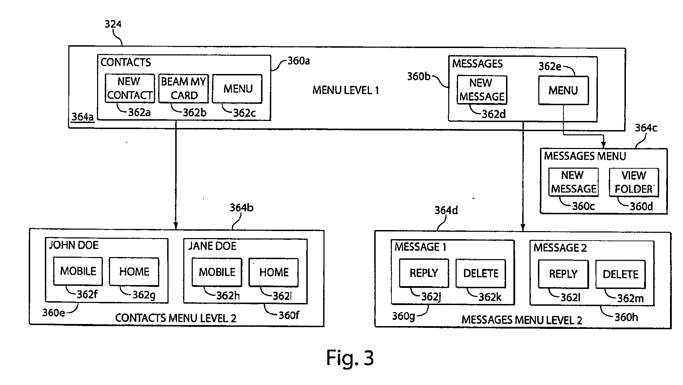

More particularly, the menu system 120 includes a menu 124, a highlight process 126 and a reveal process 128. Figure 3 is a conceptual block diagram of a menu 324 included in the menu system 120 according to an illustrative embodiment of the invention. The menu 324 includes a plurality of primary menu items 360a-360h (collectively primary menu items 360) and a plurality of secondary menu items 362a-362m (collectively secondary menu items 362). The menu 124 organizes the menu items 360 and 362 into menu levels 364a-364d (collectively menu levels 364). Menu items 360 and 362, in general, provide entry points to other menu levels 364, to executable programs or applications, or to data, including text, images, audio, video and multimedia data. The menu associates graphical and/or textual data, such as icons and text labels, with the menu items 360 and 362 for visually displaying the corresponding menu items 360 and 362.

Menu levels 364 are generally hierarchical, for example, with a tree and branch structure. The hierarchy, however, need not be strict. The menu levels 364 of the menu 324 may overlap and individual menu items 360 and 362 can be located at multiple menu levels 364. Some menu items 360 and 362 can be accessed by multiple paths through the menu 324 ("path" refers to the series of menu items 360 and 362 selected by a user to reach a given menu item 360 or 362). The content of the menu levels 364 (i.e., which menu items 360 and 362 are accessible) is context sensitive (though it need not be in other embodiments). For example, the menu 324 makes additional menu items 360 and 362 and/or menu levels 364 accessible in response to the data processing device 100 detecting the attachment of a peripheral device. Similarly, the menu 324 disables menu items 360 or 362 or menu levels 364 depending on the context of the data processing device's 100 use. For example, the menu 324 disables communication functionality in low connectivity environments or when the data processing device 100 is low on power.

A menu level 364 includes one or more primary menu items 360. For example, the top menu level 364a of menu 324 includes primary menu items 360a and 360b, labelled "Contacts" and "Messages", respectively. Selection of a primary menu 360 on a first menu level 364 leads to another menu level 364. For example, selection of the Contacts primary menu item 360a leads to a second Contacts menu level 364b.

A primary menu item 360 is associated with one or more secondary menu items 362. For example, primary menu item 360b, labelled "Messages", is associated with secondary menu items 362d and 362e, labelled "New Message" and "Menu", respectively. Secondary menu items 362 provide navigational and or functional shortcuts.

Navigational shortcuts link to other menu levels 364 and/or menu items 360 and 362 within the menu 324. Navigational shortcuts link to menu levels 364 and menu items 360 and 362 within the branch of the menu 320 hierarchy that includes the primary menu item 360 with which the secondary menu item 362 is associated. Navigational shortcuts may also link to menu levels 364 or menu items 360 and 362 in other branches of the menu 320 hierarchy. A navigational shortcut thus provides an accelerated path to avoid more lengthy traversal of the menu 324. When the shortcut target is at a leaf of the menu tree and branch structure, a navigational shortcut initiates the execution of a function on the data processing device 100. For example, selection of the secondary menu item 362d, labelled "New Message" and located within the "Messages" primary menu item 360b, initiates the function to generate a new message. This provides the user a convenient shortcut versus the alternative navigation from menu level 364a through the Messages menu level 364d and beyond.

A functional shortcut relates to the primary menu item 360 from which the functional shortcut is activated. The use of functional shortcuts makes multiple functions accessible to a user within a single menu item 360, thereby avoiding the need to use a softkey or options button. An example of a functional shortcut is secondary menu item 362e, labelled "Menu" and associated with the "Messages" primary menu item 360b. This links to the "Messages Menu" menu level 364c which gives access to an enriched set of user options such as "New Message" and "View Folder" that relate to operation of the "Messages" menu item 360b. The association of shortcuts with primary menu items is predefined by the menu 320 designer or author. In addition, or in the alternative, a user can customize the associations to reflect an individualized usage of the menu 120.

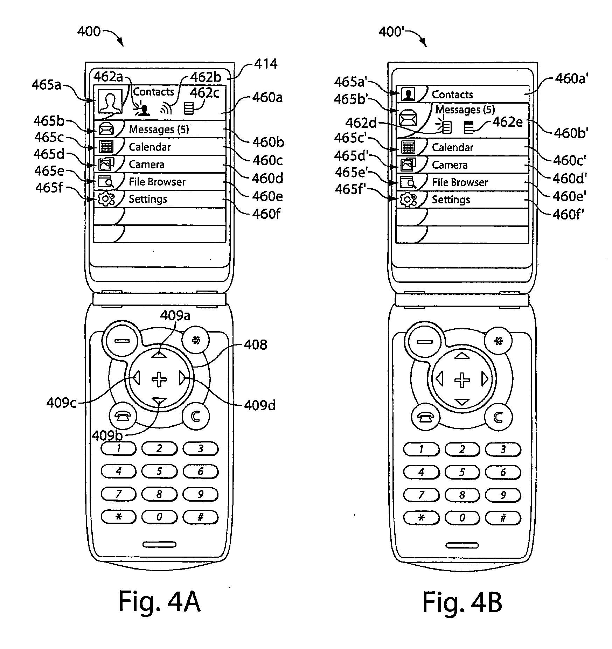

Figures 4A-4D are top views of a data processing device 400 displaying the output of the menu system 120 on display 414. The illustrative output in Figure 4A includes six primary menu items 460a-460f, labelled "Contacts", "Messages", "Calendar", "Camera", "File Browser", and "Settings", respectively. The menu system 120 assigns each primary menu item 460a-460f a corresponding visual field 465a-465f in which the primary menu item is displayed. A visual field 465 is a collection of pixels arranged for example, in a rectangular or other geometric shape that distinguishes one primary menu item 460 from another.

In Figure 4A, each primary menu item 460a-460f is assigned a generally rectangular visual field 465, one above another in a vertical column. Each visual field 465a-465f includes an icon corresponding to its associated primary menu item 460a-460f, as well as a text label. In addition, visual field 465a (corresponding to primary menu item 360a in Figure 3), labelled "Contacts", is larger than the other visual fields 465b-465e. The visual field 465a also includes three secondary menu item 462a-462c.

### Highlight Process

The larger visual field 465a of primary menu item 460a indicates the primary menu item 460a is active. The effect of triggering the select control 110 is governed by which menu item 460 and 462 is active, as will be described below in further detail. The larger visual field 465a is one of a number of visual cues generated by the highlight process 126 to indicate to a user which menu item or items 460 and 462 is active at a given time. Other visual cues generated by the highlight process include, without limitation, changing the color of a visual field 465, animating the icon corresponding to the primary menu item 460, and changing the z-order of the visual field 465 with respect to the visual fields 465 of other inactive menu items. Other visual cues may be used to further emphasize an active menu item 460 and 462 including applying a shadow behind the visual field 465 (by using z-ordering this shadow can appear to have a 3-D aspect) and using transparency to allow underneath content to be partially visible through the top layer of content.

Figure 4B is second top view of the illustrative data processing device 400' according to one embodiment of the invention. In this second view, the second primary menu item 460b', labelled "Messages", is active and thus highlighted by the highlight process 126. Like the visual field 465a of primary menu item 460a in Figure 4A, the visual field 465b' of the primary menu item 460b' is larger than the remaining visual fields 465a' and 465c'-465f'. The scaling of visual field 465b' is most noticeable in comparison with the inactive, and thus unscaled and unhighlighted visual field 465b visible in Figure 4A.

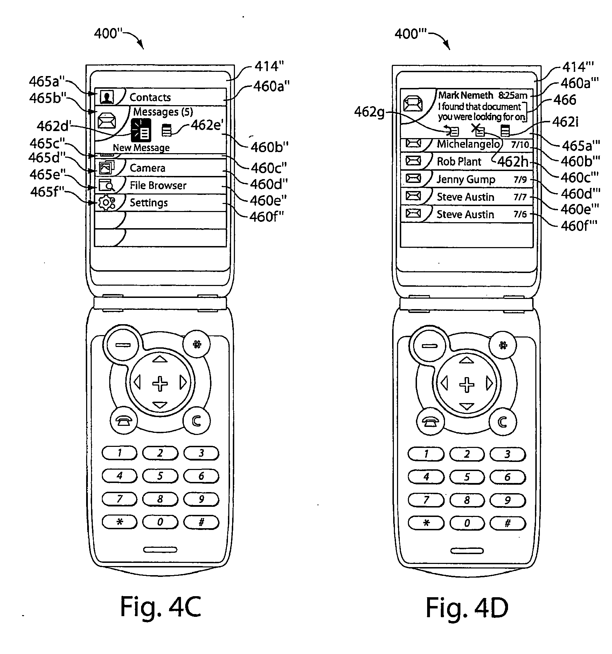

Figure 4C demonstrates that secondary menu items 462 are also highlighted by the highlight process 126 when a secondary menu item 462 is active. In Figure 4C, both the "Messages" primary menu item 460b" and the "New Message" secondary menu item 462d' are active. The active state of the secondary menu item 462d' is indicated to the user by the highlight process 126 changing the color of a portion of the primary menu item 460b" visual field 465b" surrounding the secondary menu item 462d'. As with highlighting primary menu items 460, the highlight process 126 can also scale, animate, change the z-order of, etc. secondary menu items 462 to indicate the active state of a secondary menu item 462.

In one embodiment, the data processing device 100 utilizes similar visual cues in highlighting, and moving between, most, if not all menu levels 364 of the menu system 120. Consistency lends to greater ease of use and can make operation of the user interface more intuitive to the user. However, different visual cues may be employed with various menu items 360 and 362 and in various menu levels 364 without departing from the scope of the invention.

### Reveal Process

In general, the reveal process displays additional information related to active menu items. For example, data processing device 400 in Figure 4A displays secondary menu item 462a- 462c because primary menu item 460a is active. In contrast, data processing device 400' displays secondary menu item 462d-462e because primary menu item 460b' is active. Using the reveal technique, it is feasible to get at least four secondary menu items 462 on screen for an active primary menu item 460. Secondary menu items 462, however, are just one class of additional information that the reveal process 128 may display in relation to an active menu item.

Figure 4D, for example depicts a fourth top view of data processing device 400''' according to an illustrative embodiment of the invention, which illustrates other forms of data the reveal process 128 displays in relation to active menu items. Data processing device 400"' displays six primary menu items 460a"'-460f"' corresponding to individual messages saved on data processing device 400"'. The first primary menu item 460a"' is active.
Visual field 465a"', corresponding to primary menu item 460a"', includes three secondary menu items 462g-462i, in a similar fashion as visual fields 465a and 465b' include related secondary menu item 462a-462c, 462d and 462e. Visual field 465a"' also includes an excerpt 466 of the message corresponding to primary menu item 460a"'. Visual fields 465b"'-465f"' corresponding to primary menu items 460b"'-460f"' do not include excerpts 466 of their associated messages.

In addition, in response to the activation of a secondary menu item 462, the reveal process 128 displays additional information related to that secondary menu item 462. For example, in Figure 4C, secondary menu item 462d' is active and highlighted. Below the icon representing the secondary menu item 462d', the text label "New Message" is displayed by the reveal process 128 to inform the user of the function of the secondary menu item 462d'. The display of information related to secondary menu items 462 that is not displayed unless the secondary menu item 462 is active is referred to as a "double reveal" process.

The reveal and double reveal processes combine to offer ease of use for both the novice user and the expert. A textual description of each operation may be mapped to the display 414 to inform the user of a menu item's function prior to selecting any active menu item. In this regard, the technique provides attributes similar to softkey mapping, but without the need for additional physical keys and the associated wastage of screen space. In particular, functionality is exposed as required when an item is active, and textual description of functions are exposed on demand. In contrast, with a softkey method, key mappings are fixed in a permanent display location.

The greater range of shortcuts offered by the reveal technique can have significant usability benefits. In particular, many users will regularly use only a small subset of the available functionality of a data processing device 100. Careful placement of these regularly-used functions in various levels of the menu system 120 can dramatically reduce the amount of up and down navigation of hierarchical menu levels, and serve to bind the entire functionality commonly used for a particular purpose into a familiar field corresponding to one or a few primary menu items 360 or 460.

### Navigation Module

Referring back to Figure 1, the navigation module 122 provides the ability for a user to interact with the menu system 120. The navigation module 122 includes a direction process 130, a select process 132 and a deselect process 134 responsive to the direction control 108, the select control 110 and the deselect control 112, respectively. In general, the direction process 130 changes which primary menu item 360 and/or secondary menu item 362 is active. The select process 130 and deselect process 132 change the active menu level, and the select control 130 also controls the initiation of functions on the data processing device 100.

### Directional Navigation

Figures 4A-4D, as described above, illustrate a plurality of navigational instructions input by a user as interpreted by the navigation module 122. As mentioned above, the direction process changes which menu item or items 360, 362, 460, and 462 are active. The data processing device 400 in Figure 4A includes direction control 408. The direction control 408 includes four actuators 409a, 409b, 409c, and 409d corresponding to up, down, left, and right, respectively. The direction process 130 interprets the triggering of the up actuator 409a or the down actuator 409b as instructions to change the active primary menu item 460. For example, in Figure 4A, if a user triggered the down actuator 409b, the direction process 130 would instruct the menu system 120 to deactivate primary menu item 460a and to activate 460b, resulting in the display of Figure 4B. Similarly, in Figure 4B, if a user were to trigger the up actuator 409a, the direction process 130 would instruct the menu system to deactivate primary menu item 460b' and to activate primary menu item 460a', resulting in the display of Figure 4A.

The left and right actuators 409c and 409d control the activation and deactivation of secondary menu item 362 and 462. For example, in Figure 4B, primary menu item 460b' is highlighted, revealing two secondary menu items 462d and 462e. From this state, were a user to trigger the right actuator 409d of the direction control 408, the direction process 130 would instruct the menu system 120 to activate secondary menu item 462d, as illustrated in Figure 4C. If the user were to again trigger the right actuator 409d, the second secondary menu item 462e' displayed in Figure 4C would be activated and highlighted, and additional information related to that secondary menu item 462e' would be displayed. Instead, if the user depressed the left actuator 409c, the secondary menu item 462d' would be deactivated and the data processing device 400" would return to the state depicted in Figure 4B.

### Selection and Deselection

When no secondary menu items 462 and 362 are active, the select process 132 and the deselect process 134 function to allow navigation between menu levels 364 of the menu system 120. The select process, in response to a user triggering the select control 110 (referred to as "selecting"), navigates down a menu level 364 and the deselect process 134 navigates back a menu level 364.

For example, referring to Figures 4B and 4C, in Figure 4B, the "Messages" primary menu item 460b' is active. If a user were to trigger the select control 410 while the data processing device 400' were in this condition, the select process 132 would instruct the menu system 120 to navigate down a menu level 364 in the "Messages" menu branch of the menu 124. This navigation results in the display presented on the display 414''' of Figure 4D. The second menu level 364 of the "Messages" menu branch of the menu 124 includes primary menu items 460a"-460f" corresponding to individual messages. If a user were to trigger the deselect control 412 when the data processing device 400''' were in the condition displayed in Figure 4D, the deselect process would instruct the menu system 120 to back up one menu level 364, resulting in the data processing device 400' output of Figure 4B.

The select and deselect processes 132 and 134 also control the data processing device 100's response to the selection and deselection of secondary menu items 362 and 462. The response to the selection of a secondary menu item 362 or 462 depends upon whether the secondary menu item is a functional or navigational shortcut.

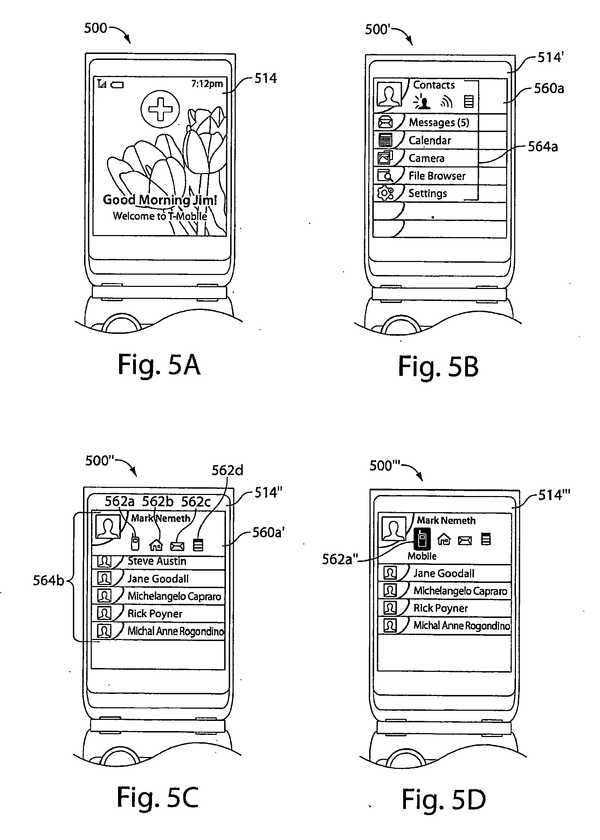

Figures 5A-5E are top views of displays 514 of a data processing device 500 according to an illustrative embodiment of the invention. The displays 514 illustrate navigation to, and selection of, a secondary menu item 562. From a start screen shown in Figure 5A (e.g. displayed when the data processing device 500 is powered on), pressing the select control 110 a first time reveals the first menu level 564a (Figure 5B) with the top primary menu item 560a, labelled "Contacts," highlighted and displaying its additional information. Pressing the select control 110 again navigates to the next menu level 364 of the "Contacts" branch of the menu 124. The second menu level 564b lists individual contacts. Upon first displaying the contact list menu level, the top primary menu item 560a', corresponding to the first contact in the contact list, is active and highlighted (Figure 5C). The highlighted primary menu item 560a' includes four secondary menu item 562a-562d, corresponding to the contact's mobile and home phone numbers, the contact's email address, and a menu link, respectively.

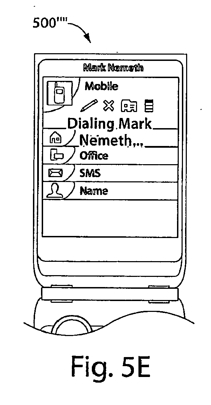

Pressing the right actuator 509d of the direction control 508, while none of the secondary menu items 562a-562d are active, activates the first secondary menu item 562a corresponding to the contact's mobile phone number, as depicted in Figure 5D. Pressing the select control 110 again at this stage, i.e., while the mobile phone secondary menu item 562a" is active, activates a phone call to the mobile phone number of this contact, illustrated on the display 514 of Figure 5E. From the screen of Figure 5D, repeatedly pressing the deselect control 110 navigates back up through the menu path to the start screen of Figure 5A.

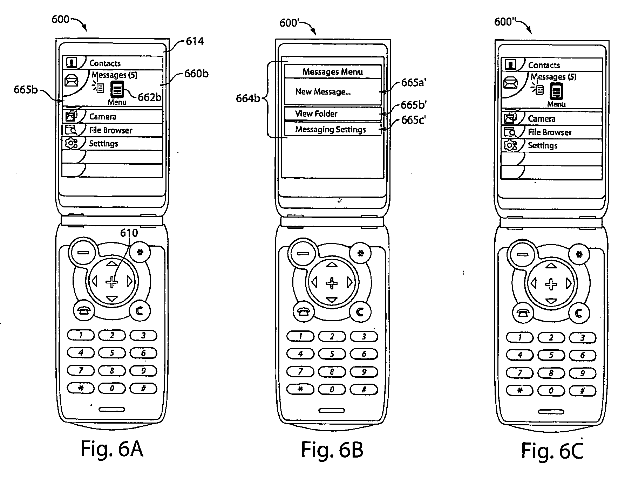

Figures 6A-6C are top views of data processing devices 600 demonstrating the selection of a functional shortcut secondary menu item 662. The display 614 of data processing device 600 indicates that the "Menu" secondary menu item icon 662b of the "Messages" primary menu item 660b is active and highlighted. In response to a user pressing the select control 610 in this scenario, the select process 132 instructs the menu system to activate the secondary menu item 662b. As secondary menu item 662b corresponds to a functional shortcut, the menu system displays the menu level 364 to which the secondary menu item 662b links, i.e. menu level 664b, depicted in Figure 6B. This further menu level 664b is displayed superimposed on a magnified or zoomed representation of the area of the Messages visual field 665b of the previous display 614 that contains the selected Menu icon 662b. The menu level 664b of Figure 6B again includes a column of horizontal visual fields 665a'-665c' that can be activated and selected using the up and down actuators 609a and 609b of the direction control 608 and the select control 610. Pressing the deselect control 612 returns the display 614 to the previous level as seen in Figure 6C, which is the same as Figure 6A.

According to one feature, the combined processes of the navigation module 122 and menu system 120 provide a degree of coherence that is not available in conventional designs for handling three basic operations of a user interface: navigating up and down levels of a functional hierarchy; enriching functionality at points within a level by presenting additional options; and selectively providing accelerated paths to move from one particular point in the functional hierarchy to a specific different point (navigational shortcut).

As an example of the second situation, if a user has descended the hierarchy to view a list of all text messages they have received, selecting a particular message (e.g., navigating down one more level) will display that message. However the user may wish not to select (view) the message, but to delete it, or save it, or obtain sender details. This scenario requires richer behavior than offered by the strict ascent/descent of hierarchical levels. An example of the third situation is a "Home" option offered at a low menu level to return to the top level menu.

According to an illustrative embodiment, the invention combines these three user interface operations in a solution that is simpler, more consistent, more predictable and therefore more intuitive than existing designs. This results, for example, because at any point in the menu system, all of the possible user actions are accessible solely by "geographic" navigation on the screen - up, down or across, using the four direction buttons. This contrasts with conventional designs, where the user has to depart from simple directional control, for example, to select a softkey offering enriched functionality, or press a dedicated "Options" button. In one configuration of the invention, geographic navigation using only the direction controls gives access to every option, because the enriched functions and navigational shortcuts may be revealed as secondary menu items 362 within the navigational reach of the four way actuator.

In use, navigation of the user interface 102 is comparable to traversing a grid of options laid out entirely on the 2-D plane of the screen using the four direction controls. The select/deselect controls 110 and 112 can be considered to navigate in a perpendicular direction to this conceptual "plane", to replace one grid of choices with the next higher or lower plane in the hierarchy. Navigation of the user interface102 may therefore be contained wholly within the scope of the six actuators - four direction plus select and deselect - used throughout in a consistent and predictable manner. Conventional designs fail to achieve this level of coherence and consistency, because they require the user to depart from one navigational mode to another (e.g softkey activation) at unpredictable and arbitrary points in the menu, thus complicating the interface and making it harder for the user to learn and use.

### Visual Effects

Some features of the data processing device 100 and user interface 102 are amplified by using one ore more of the below described visual effects.

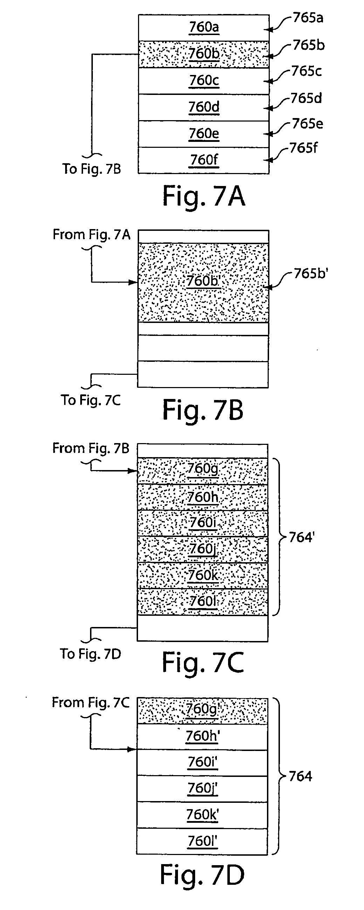

Figures 7 to 10 illustrate graphical zoom techniques in accordance with illustrative embodiments of the invention. When a highlighted menu item 360 or 362 is selected, instead of simply replacing the current display with a display of the next menu level 364, the transition from the current menu level 364 to the next menu level 364 is provided by an animated zoom transition sequence.

The data processing device 100 uses at least two types of zoom transitions, namely zoom transition type 1 and zoom transition type 2. Both of these zoom transition types will be described in more detail below. In one embodiment, zoom transition type 1 is used for transitions between main menu levels 364 (for example, resulting from the selection of primary menu items 360) (as in Figure 7) or menu level 364 to data/content transitions (e.g., on zooming from a bottom menu level 364 to associated content). In contrast, zoom transition type 2 is used to display transitions following the selection of a secondary menu item 362 icon (as in Figures 6, 10 and 11B).

Figure 7A shows a conceptual initial screen display comprising a column of primary menu items 760a-760f (horizontal visual fields 765a-765f corresponding to those of, for example, Figure 4A). A second primary menu item is highlighted 760b, as indicated by the shading in the diagram. Selecting the highlighted menu item 760b initiates the animated zoom transition sequence. The transition sequence begins by magnifying the selected menu item 760b so that it partially obscures the adjacent menu items 760a and 760c of the initial screen (i.e. the screen area occupied by the visual field 765 of the selected item 760b expands progressively). This is shown in Figure 7B, illustrating the magnified item 760b'.

At this stage, the content of the expanded visual field 765b' is a magnified representation of the content of the selected menu item 760b. As the visual field 765b' continues to expand, the magnified representation of the selected menu item 760b is replaced by a representation of the content of the next menu level 764'. In particular, the content of the expanded visual field 765b' is replaced with a column of new primary menu items 760g-7601, initially displayed at a reduced scale, as depicted in Figure 7C. The column of new primary menu items 760g-7601 expands until the final screen display of the new menu level 764' is displayed as shown in Figure 7D, which shows the new column of menu items 760g'-7601' with the first new primary menu item 760g' highlighted.

In the example of Figures 4A to 4B and 7, the display of a new menu level 364 effectively fills a screen area. In zoom transition type 2, the display of the new menu level 364 does not fill the screen, but is shown superimposed on a magnified representation of the selected menu item 362 from the previous menu level 364 (as seen in Figure 5B).

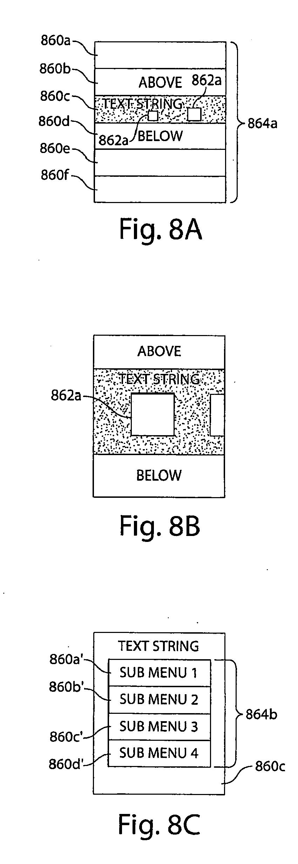

An example of the type 2 zoom transition is shown in Figures 8A-8C, corresponding to the transition between Figures 5A and 5B. Figure 8A shows an initial display screen comprising a column of primary menu items 860a-860f. The highlighted primary menu item 860c contains two secondary menu items 862a and 862b. Secondary menu item 862a is highlighted, revealing further associated information ("Text String"). The primary menu items 860b and 860d adjacent to the selected item are indicated by the text "ABOVE" and "BELOW".

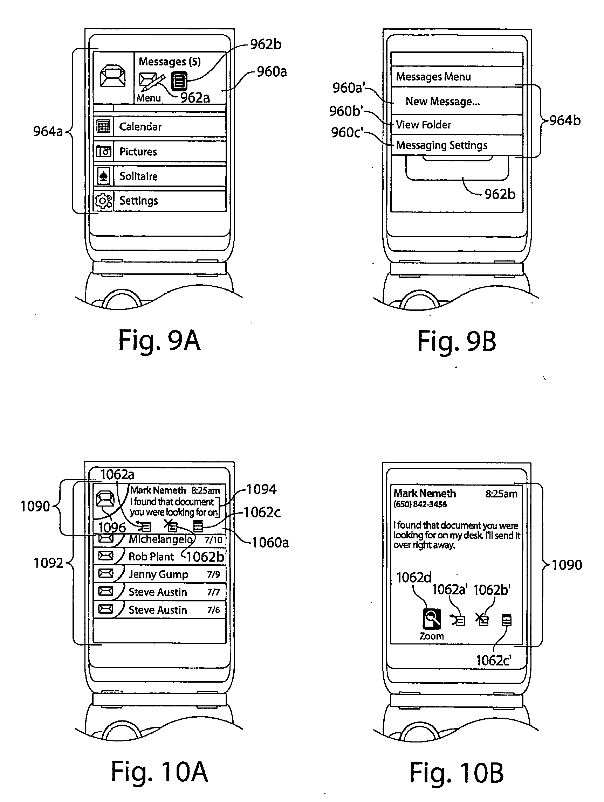

Selecting the highlighted secondary menu item 862a initiates the type 2 zoom transition sequence. As depicted in Figure 10B, in this case, the zoom transition sequence expands the display of the adjacent area of the current menu level 864a along with the selected secondary menu item 862a'. At some stage during the sequence a representation of a new menu level 864b is superimposed on the expanded representation of the current menu level 864a and expands therewith. Figure 10C shows the final screen with the new menu level 864b primary menu items 860a'-860d' shown against a background of the expanded representation of the previous menu level 864a primary menu item 860c.

Figures 9A and 9B show an example of the first and final screens of a type 2 zoom transition in an implementation that also incorporates the highlighting and reveal techniques. In Figure 9A, the "Messages" primary menu item 960a of the current menu level 964a is highlighted, to reveal two secondary menu items 962a and 962b, of which the right hand "Menu" secondary menu item 962b is highlighted. This is turn provides a further reveal of the descriptive text "Menu".

Selecting the "Menu" secondary menu item 962b initiates a type 2 zoom transition which ends with the screen of Figure 9B. The next menu level 964b is displayed with primary menu item 960a', labelled "New Message", highlighted. The next menu level 964b also includes primary menu item 960b' and 960c' labelled "View Folder" and "Messaging Settings", respectively, superimposed on a magnified representation of the selected secondary menu item 962b icon and the adjacent part of the initial display of Figure 9A. Note that part of the text "Messages" and "Menu" is visible in Figure 9B.

The use of zoom transitions improves the perceived visual logic of navigation through the menu 124 hierarchy, providing the user with a better sense of the location of a current display screen within the menu 124 hierarchy. The use of different types of zoom transition for different types of menu operations (e.g. type 1 for main level transitions and type 2 for shortcut transitions), further improves this sense of menu 124 location.

The number of intermediate screens used in the zoom transition sequences can vary, as can the duration of the sequence. Typically, the sequence will be animated at a rate of between 5 and 25 frames per second. The duration of the sequences should be long enough to provide a perceptible visual zoom effect but not so long as to delay the normal operation of the telephone to an unacceptable degree. Generally, the duration of the sequence might be in a range of about 1/8th of a second to one second. A facility may be provided to enable the user to select the duration of the sequences within a predetermined range, and/or to switch the effect off. Within the zoom transition sequences, the switching of the content of the expanding visual field from the expanding current menu item content to the new menu level content can be performed using any of a variety of well known "cinematic" editing transitions, e.g. cuts, fades, dissolves and wipes.

When navigating "back" up through the hierarchy, the zoom "in" transitions described above can simply be reversed to provide the same visual logic in both directions. In this sense, the select control 110 acts to "zoom in" through the menu system 120 and the deselect control 112 acts to "zoom out", so that the visual zooms reflect the direction of navigation through the menu 120 hierarchy.

The zoom transition, in one embodiment, is generally visually centered on the physical screen location of the selected item. In Figures 9A-9B the zoom is centred on the selected secondary menu item 962b. For primary menu item menu level transitions, where the menu items include representative icons at the left hand end of the horizontal field (as in Figure 4A), the zoom may be centered on such icons.

Figures 10A and 10B illustrate a further example of a type 1 zoom transition in the form of a menu level to content transition. In this example, the type 1 zoom transition is applied to the module of opening a text message 1090 from a message menu 1092. Figure 10A shows the message menu 1092 with the first primary menu item 1060a highlighted, revealing an excerpt 1094 of the message content and three secondary menu item 1062a-1062c shortcut icons (none of which is highlighted). Pressing the select control 110 initiates a type 1 zoom transition which ends with the screen of Figure 10B.

In this case, the zoom transition is visually centered on the envelope icon 1096 in the top left of Figure 10A. Figure 10B displays the complete message 1090 with a further "zoom" secondary menu item 1062d in addition to the same secondary menu items 1062a'-1062c' as in Figure 10B. Note that the left hand secondary menu item 1062d in Figure 10B is already highlighted when the message 1090 is opened, revealing the descriptive text "Zoom". This illustrates how a bottom level of a menu hierarchy displays secondary menu items 1062 icons already in a "double reveal" state. This makes sense, though is not required, particularly for the bottom level of a menu 124 hierarchy, since use of the select control 110 generally does not lead to a further lower-level menu levels 364. This principle may also be applied to higher-level menu levels 364.

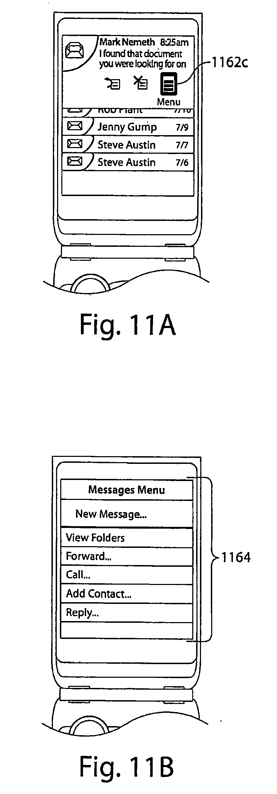

Figures 11A to 11B show the effect of zooming in and back out from the "Menu" shortcut icon 1162c shown in Figure 10A(1062c), using a type 2 zoom transition. These zooms are centered on the highlighted "Menu" secondary menu item 1162c shortcut. The menu level revealed in Figure 11B includes some of the same options (plus additional options) to the menu of Figure 11A (which was accessed from the Messages item in the menu level 364 above the level of Figure 11A).

The menu of Figure 11B shows options that are generic to all messages, while the menu of Figure 11A shows options that are specific to a particular message. This is a further example of how the user interface of the data processing device 100 can provide context-sensitive menu options while preserving generally consistent visual logic and using a minimum number of control buttons.

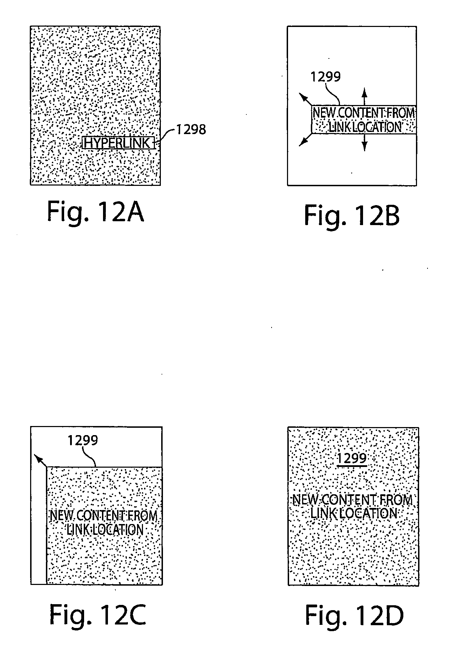

Figures 12A to 12D illustrate how one embodiment of the zoomable user interface 102 extends the use of zooming to the behaviour of applications that are executed on the device 100, or documents that are viewed on the device 100. For example, a browser application or a viewed document may contain a hyperlink 1298. Clicking the hyperlink 1298 will cause the hyperlink target 1299 to zoom out of the page location occupied by the link 1298. Visually, this behaviour mimics that of zooming between menu levels etc. as previously described.

The use of visual zooms through the menu system 120 and into applications and data accessed through the menu system 120 provides a seamless transition between system navigation and content, using only 4-way direction, select and deselect controls 108, 110, and 112. Zoom in/out commands are generally input using the select/deselect controls 110 and 112, the operation of such buttons being interpreted as zoom commands either automatically, where appropriate in context, or, for example, by first navigating to a Zoom icon or the like that may be displayed as a secondary menu item or the like where appropriate.

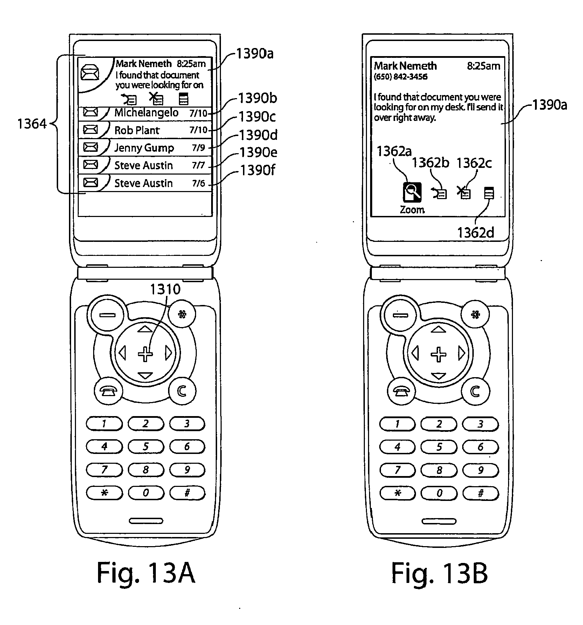

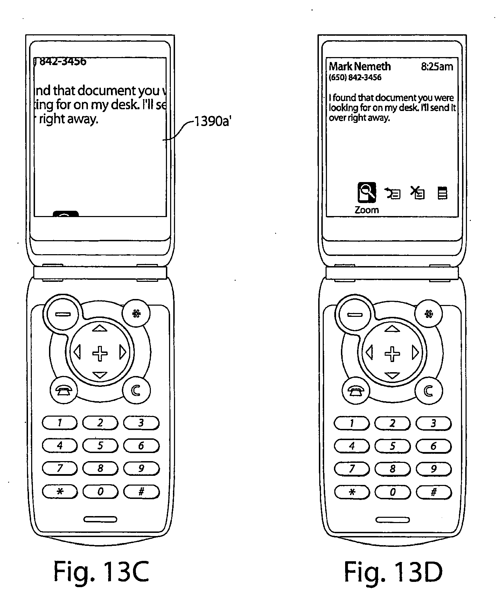

The continuation of the zoom metaphor through the menu system 120 into data content and back, is illustrated in Figures 13A to 13D. A menu level 1364 showing a list of available messages 1390a-1390f is shown in Figure 13A, with the top message 1390a highlighted. Pressing the select control 1310 causes the transition to Figure 13B where the full text of the selected message 1390a is displayed. A set of secondary menu items 1362a-1362d is also presented, with a double reveal of the first "zoom" secondary menu item 1362a as previously described with reference to Figure 10B. Pressing the select control 1310 at this point causes the text content of the message 1390a' to zoom in as shown in Figure 13C. At this stage, a user may scroll and pan around the displayed text content using the direction control 108.

In this embodiment, use of the select control 1310 gives the user the consistent sense of zooming through the interface. In particular, in the transition from Figures 13A to 13B, the select control 1310 causes a zoom into a deeper menu level, while in the transition from Figures 13B to 13C the same select control 1310 lets the user zoom into content when there are no further lower menu levels. The zoom metaphor is further strengthened by the use of the deselect control 1312 to zoom out of the content. This is illustrated in Figure 13D, which is reached from Figure 13C by pressing the deselect control 1312. Figure 13D is equivalent to Figure 13B. Consequently, a reverse zoom will continue back up the menu 120 hierarchy (if the user presses the deselect control 1312 again) to return to the state of Figure 13A.

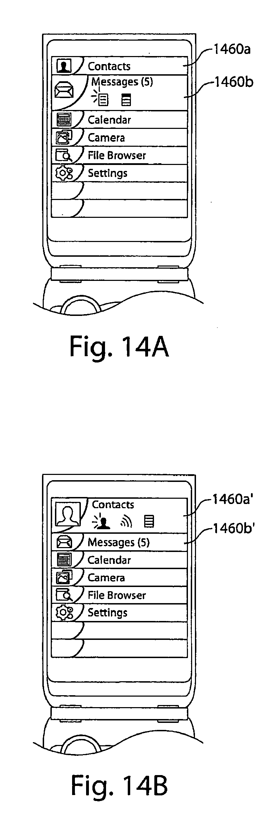

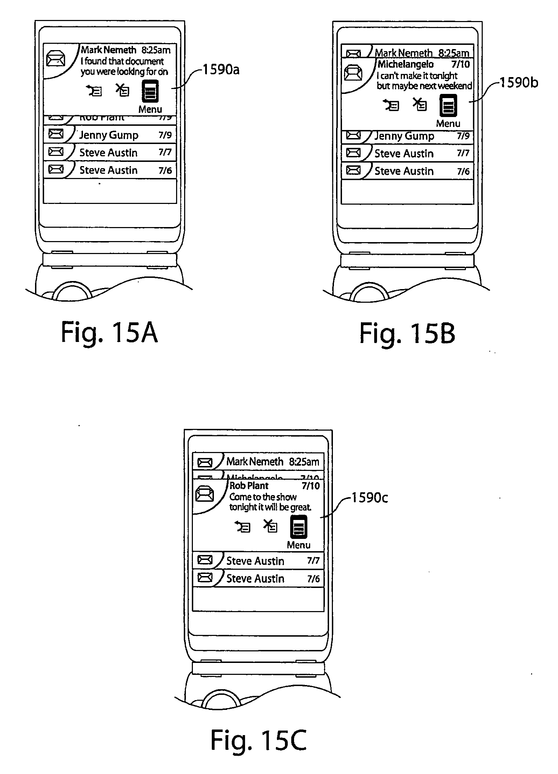

Figures 14A and 14B; and 15B, 15B and 15C depict z-order highlighting effects utilized by the data processing device 100 according to an illustrative embodiment of the invention. In Figure 14A, the "Messages" primary menu item 1460b is highlighted. To indicate this, it appears to sit physically on top of part of the adjacent primary menu item 1460a labelled "Contacts". The Contacts primary menu item 1460a, though partially obscured remains visible and can be activated by use of the direction control 108. Figure 14B shows the Contacts primary menu item 1460a' now highlighted on the same list. This has caused the "Messages" field 1460b' to return to a lower z-order position, with the highlighted primary menu item 1460a' now on top.

In addition to re-arranging the z-order of menu items to highlight an active menu item, the highlighting process 126 also scales the visual field of the active menu item to emphasize the highlighting. The visual field of the highlighted menu item is scaled up relative to the visual field of non-highlighted menu items. The scaling may include the scaling of text, fonts, and graphics (i.e. graphic and text objects) within the highlighted visual field. In addition, non-highlighted visual fields remain static in scale and location on the display, providing a consistent and stable look for the menu during use. As a user navigates down a menu level, the visual field of each primary menu item is highlighted and brought forward in turn, while the other fields remain fixed in location and appearance (though in other embodiments, the non-highlighted primary menu items may shift position). This technique may also be used to display partial content associated with a highlighted field, as shown in Figures 15A to 15C, which depict the successive highlighting of items in a list of text messages 1590a-1590c.

The z-order technique may also be used with the "reveal" technique. The ability to create more space on screen by utilizing the z-direction is beneficial for revealing shortcut icons and other additional information in a highlighted field. Z-order highlighting is applied at least to primary menu items and may be extended to revealed secondary menu items, etc. The z-order technique may be extended to user-selectable items such as hyperlinks within applications and documents.

In addition to the features of the data processing device 100 described above, additional functionality can be obtained in one ore more, or a combination of the following alternative embodiments.

### First Alternative Embodiment

Referring back to Figure 1, in the illustrative embodiment described above, the menu system 120 includes sufficient information to generate the output presented on the display 114. In alternative embodiments, the menu system includes a state machine which can store sufficient information to generate the output required to display one menu level 364 at a time. In such an alternate embodiment, the menu system 120 communicates with one or more underlying applications 180 and data sources 182. For example, the applications may include a "Contacts" database application 180 and a "Messaging" application 180. Data sources 182 may include data tables on the data processing device 100 itself, or data stored on remote storage devices. Upon receipt of a select instruction from the navigation module 122, the menu system queries the appropriate application 180 and/or data source 182 to learn the appropriate result. For example, if a user triggers the select control when the "Contacts" primary menu item is active, the menu system queries the "Contacts" application 180 to retrieve a list of contacts to use as primary menu items and to retrieve a list of associated secondary menu items for each primary menu item. Similarly, if a particular contact phone number secondary menu item is active and a user triggers the select control, the menu system instructs the contact application 180 to dial the phone number associated with the active secondary menu item.

The deselect control 112 and deselect module 134 operate as duals to the select control 110 and module. For example, if the last menu item selected resulted in navigation to a new menu level within the menu system 120, in response to a user's depression of the deselect control 112, the deselect module 134 informs the navigation control to deactivate the currently active menu item and menu level and activates the previously active menu level.
To this end, the navigation module 122 may store a history of navigational inputs received from the user. If the last menu item selected resulted in the initiation of a function, in response to the depression of the deselect control 112, the deselect module 134 stops the initiated function.

### Second Alterative Embodiment

The user interface framework described herein may be further enhanced and extended when used in combination with a digital document processing system of the type disclosed in international patent application no. WO 01/79984. Such document processing system is characterized by an architecture that includes a plurality of "document agents", each document agent being created to recognize and interpret a pre-determined document format, and to translate an incoming document in the pre-determined format into an internal representation of the document. The internal representation produced by the document agents is generic, and common among the agents so that the remainder of the system need only deal with a single data representation, regardless of the format of the incoming document.

The document processing system further contains a core engine which operates on the internal representation to perform document layout, rendering, animation, and event handling. The core engine also has script capability, and may include a script or bytecode interpreter together with an appropriate reflection layer to handle scripts contained within the processed documents. The document processing system also provides generic document manipulation controls such as pan, zoom, go to page.

The core document engine communicates directly with the data processing device 100 operating system through an abstraction layer, so it has access to all of the OS functions and device events. The core engine may thus be utilized for all of the event handling and script execution required to interact with the user interface. In addition, the user interface may be implemented as an interactive multimedia work which may also be processed by a document agent residing in the document processing system. The document processing system converts the multimedia work to the internal representation which is then rendered by the core engine.

A solution implemented in this way enables a common presentation model for multiple formats of multimedia works. The existence of modular document agents means that works may be created in a variety of multimedia formats, for example by providing a document agent for HTML, another for MACROMEDIA FLASH (provided by Macromedia, Inc. of San Francisco, CA), another for SVG, SMIL, etc. Since the document agents are primarily parsers, they can be small in code size (under 100 kBytes), allowing several to be present even on a mobile device with limited memory. The document agent is much smaller than a typical multimedia player, because all of the layout, rendering, styling, animation and timeline handling done in a typical player is handled by the core engine of the document processing system. Since the core engine operates on a common internal representation, it need not be replicated when different multimedia formats are used - only the extra document agents are needed.

Such a system opens the possibility for user interface works to be created in different multimedia formats, and such formats to be combined in a single interface. For example, an interface work to a Contacts application written in SVG may be combined on the same device with a Game interface written in FLASH, and a Messaging interface authored in HTML. These separate works may be played seamlessly together in a single device interface, in a manner that is transparent to the user. Each multimedia work is loaded as required, being matched to its appropriate document agent according to the file format. The event handling, rendering, animation and scripting performed by the core engine is uniformly applied irrespective of the native format of the multimedia work.

As suggested above, the user interface 102 may be implemented as one or more interactive multimedia works, which may be made up of a number of multimedia segments. Multimedia formats such as HTML allow the creation of documents containing text, images and styling that may be laid out to form the basis of the visual interface. Several such multimedia formats, such as SVG (Scalable vector Graphics), MACROMEDIA FLASH, and SMIL (Synchronised Multimedia Integration Language) provide native animation functionality which may also be employed within the work to create effects such as the animated zoom effects described below. Interactivity is provided by means of executable scripts contained in the multimedia work.

A script is a sequence of instructions that potentially include logical decisions, looping and conditional looping. To allow interactivity, the script uses so-called "event handlers", to capture events that occur in the computing environment and execute script code in response to that event.

ECMASCRIPT, provided by ECMA International of Geneva, Switzerland, is a generic scripting language which defines the script syntax and also requires certain native functions such as math, date, etc., to be provided. Otherwise, ECMASCRIPT is extensible, so long as these extensions are supported in a host environment. The most familiar example of an ECMASCRIPT compliant scripting language is JAVASCRIPT (from Sun Microsystems, Inc. of Palo Alto, California), typically found within a web page viewed by a browser. This script is contained within the webpage itself, and applies effects to the web document when viewed in the host browser environment (for example, change content on mouseover, etc.).

A further example is MACROMEDIA FLASH ACTIONSCRIPT, provided by Macromedia, Inc. of San Francisco, California. This is also based on ECMASCRIPT (although not fully compliant) but it has a set of objects, properties, etc., that are different from JAVASCRIPT. For example, ACTIONSCRIPT contains FLASH specific objects such as MovieClip. A document with ACTIONSCRIPT requires a host environment that recognizes and executes these functions, in a FLASH Player, for example, in order to properly play.

The ability of a host application (such as a browser, or the core engine, etc.) to recognize and act on a script within a document is determined by an API and a bridging layer that binds script objects and methods to corresponding data and functions in the host environment. This is commonly called a 'reflection layer', because the native objects are reflected into the scripting world so that they may be accessed and manipulated by script instructions. For example, a user of a conventional browser (such as Microsoft Internet Explorer, or Netscape) may open a new browser window. The browser's reflection layer creates a new object to represent this window, so that JAVASCRIPT may access the window properties (for example the menubar property of the window is now available to JAVASCRIPT.)

Scripting languages typically use what is referred to as a "document object model" or DOM. This is a hierarchy of objects and their properties, methods and events. Through such properties and methods, a script can access and specify aspects of the host application itself, as in the browser window example above, and also access objects within the document containing the script. For example, a button (button1) within a form (f1) on a web page hosted in a browser may be accessed by means of the script object *document.fl.buttonl.* The result of interacting with this button may then be authored as a script sequence to be executed in response to a click event.

Using a DOM and ACTIONSCRIPT, the data processing user interface may be implemented in MACROMEDIA FLASH. For example, to display a menu level, the data processing device 100 executes a FLASH multimedia work ("work") containing the visible elements of the menu level. In response to a 'down key pressed' event, a script handler in the work rearranges the displayed items to render an updated display. The z-order and scaling of the highlighted field may be achieved directly within the multimedia work, as can the adjustment of the displayed content to reveal the new information. Similarly, the work may include zooming effects by employing animation features provided within the FLASH format. Such an animation would be activated through an event handler script in response to a key press event.

A user interface based on a multimedia work, according to an illustrative implementation of the invention, includes functionality to access native code that cannot be scripted. Therefore, the multimedia player for the user interface has a DOM that is extended with an object called the _app object, and a set of methods on this object which allow native code libraries (DLLs) to be registered, and their functions exposed for use by scripts within the multimedia work.

The native code libraries may be written in a compiled language such as C, or C++. They may contain functions that can only be programmed with the use of such a language, and that are beyond the capability and scope of the scripting language associated with the multimedia work. Sample libraries include, a library to play MP3 files, or a library to manage a database of contacts. One means to accomplish the desired extensibility of the user interface framework is to assign the native functions provided in the DLL a hex UID number (unique identifier). For example, the function PlayAudioFile in an MP3 library may be given UID 0x2400. These functions are made available to the author of the multimedia work through a method of the _app object introduced above.

After registering the library, the multimedia work can call the exposed library functions by means of a method called _app.handler, together with the UID for the required function. For example, a UI author would invoke _app.handler(0x2400, "Bohemian Rhapsody") to play the MP3 audio file of that name. This scheme effectively adds the declared library functions into the reflection layer, and makes them available to be called by their UID reference by the work's script. The reflection layer is thus dynamically extended by the addition of the new functions.

This technique allows extensions to the multimedia player with functions such as those to enumerate a file directory and return the list of its contents. This information can be returned to the multimedia work in a variable array whose elements may then be used in the work like other content. Native functions to open individual files and extract their contents may also be provided. This access to filing systems, both local to the device and across a network, storage card, or peripheral device allows the author to incorporate external documents or content that is not included within the actual file of the multimedia work itself.

An example of this is a "smart photo gallery" where a work is authored that has instructions to display photos, including their appearance and transition effects, etc.
However, the photos to be displayed by the work are not part of the work itself, as in the conventional approach. Under the present method, they can be populated into the work by a command to the player to enumerate a directory, which may be the photo directory on a camera phone that is running the player. The list of photos in the directory is read by the player, and passed as an _app object array to the multimedia work. The multimedia work integrates the externally provided photo objects within the gallery by referencing their index in the _app array, opening the object and applying the effects defined in the authored work.

Other examples may include populating lists or menus dynamically - rather than have a hardcoded list or menu within the authored multimedia work, the work instead references a remote location containing the list or menu, and this remote location may change dynamically with the control of the original work. For example, new items may be added to the list, and when the work is next played these new list items will be available to it. The authored work contains the instruction to make use of what is in the list, but the list itself need not be statically defined within the work as in many current approaches.

Yet another example is a work authored to make use of a contacts database, where the database can grow and change dynamically. The functionality of the work does not change because it is pre-authored. However, the content to which this functionality applies is dynamic rather than static. These examples illustrate the idea of a dynamic template, where content is inserted dynamically into the multimedia template.

The framework also allows functionality to be extended at run time. For example, a data processing device 100 may be shipped with a user interface 102 work with restricted functionality. By paying a premium, the user may download a new user interface 102 work that contains enhanced functionality, such as an audio player or a document viewer capability. When played within the user interface 102 framework as described here, the new work will register additional libraries (DLLs) not utilized by the basic interface, and these libraries may be loaded at run time of the device to expose new functionality that was previously inaccessible from the restricted interface work. The framework, including the DOM and extensible reflection layer, manages the integration, control and communication within the system between the enhanced work that calls the new library function, and the DLL that executes in response to the function call.

The implementation as described also provides for existing multimedia formats (FLASH, SVG, HTML, SMIL, etc.) to be extended to handle/respond to events that are beyond their native scope. Conventional events include, for example, mouse clicks and key presses, and a standard scripting language can respond to events by using OnClick, OnKeypress, etc. The proposed system extends this by registering listener objects in the UI that respond to system, device and library events - for example, events such as OutofMemory; IncomingCall; CardInserted; etc.

The mechanism to achieve this utilizes the extensible reflection layer. Each native application, written in C or equivalent, may gain access to native events provided by the operating system and device software. These native libraries may therefore expose system and device events, for example an email application may trap an event to indicate that a new email has been received.

By using the _app object and _app.handler method, these system events may be reflected through to the multimedia work to be acted upon by a script within the work. For example, the email application may contain a function with UID 0x0036 to add a callback object into the script, such that events trapped by the native application are attached to the callback object as follows:

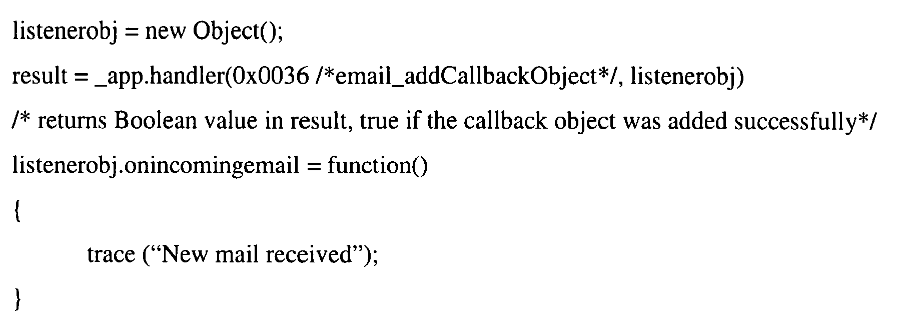

This script creates an object (listenerobj) within the script which can respond to events from the native email application. In this case, the script activates an event handler that raises a screen message when a new mail arrives.

This opens up the possibility for different multimedia works to respond in different ways to the same event, according to the author's intent. An example is a player of this type running on a handheld device. The user inserts a memory card into the device, causing the device to generate an event which is intercepted by the multimedia player. The interception causes the player to execute the function within the work which is associated with the "card inserted" event. The event handler in the multimedia work can (for example) choose to enumerate the files on the inserted card using the technique described above, and include selected files within a slide show. A different work might instead have a function that plays a special tune to alert the user that a card has been inserted.

Similarly, a mobile phone may generate an event to indicate that a text message has been received, or a BLUETOOTH (of Bluetooth SIG, Inc. of Washington, D.C.) wiresless communication channel has been opened. The multimedia player pushes this event to the multimedia work, which may respond in several ways, for example by displaying a clip informing the user, or incorporating the text message within the work. Other types of events include incoming phone call, document loading complete, out of memory, etc.

In implementations in which the user interface 102 includes a multimedia player, the user interface 102 may include a manager module to integrate the underlying system with the multimedia works. This module may handle tasks such as loading multimedia works into the player; loading and unloading the necessary application libraries as required by the multimedia work; switching between different multimedia works when required. The manager module allows a full user interface 102 to be composed of several segments of a single user interface 102 multimedia work, or multiple separate works each performing a certain function - for example a game interface, an address book, etc. The manager module provides the flexibility for each work to access one or several application services, and for several multimedia works to share access to a single application service. In its broadest sense this methodology offers an environment for exposing system events to a wide range of media formats which do not natively recognize these events. The method extends the event handling of those formats to include response to system events.

In one implementation, the multimedia work and multimedia player render document content as well as user interface 102 output native to the multimedia work. The multimedia player constructs its output by firstly populating document content, such as a text message, into a multimedia work by means of a script within the work. The rendering of the content is then performed by the multimedia player, identically to rendering of the other user interface elements, such as the graphic icons, in the work.

In an alternative implementation, the content of the text message is processed separately, by a document processing engine of the type described above. The user interface elements of the multimedia work (icons, etc.) continue to be handled by the multimedia player. With this implementation the data processing device constructs a display by overlaying the rendered output from the document engine (the text message) on top of the output of the player. This may be done by dividing the screen areas available to each output (the division being controlled by the multimedia script) or by the use of transparency to create a transparent canvas within the player output for use by the document processing engine. This implementation makes the specialized functionality of the document engine available for use by the user interface. For example, the document content may be scaled, panned, reflowed, etc., without changing the visible user interface controls, which are rendered through the player. The user interface elements and content may be scaled to different factors. When the document processing engine processes multiple document types, a user interface work with a single set of controls may handle the multiple document types consistently.

The invention may be embodied in other specific forms without departing form the spirit or essential characteristics thereof. The forgoing embodiments are therefore to be considered in all respects illustrative, rather than limiting of the invention.

## Claims

1. A data processing device comprising:
a display;
a direction control;
and a graphical user interface including:
a menu system for providing a first plurality of primary menu items to a display, each of the primary menu items having a visual field on the display;
a navigation module for enabling a user to navigate the menu system using the direction control; and
a reveal process for displaying in at least one of the visual fields a first plurality of secondary menu items associated with a first of the plurality of primary menu items, in response to the user navigating to the first of the plurality of primary menu items, while continuing to display a remainder of the first plurality of primary menu items.

2. A data processing device according to claim 1 wherein the secondary menu items comprise shortcut items.

3. A data processing device according to claim 1 or claim 2, wherein the first plurality of secondary menu items is dependent upon one of a status of a device that incorporates the user interface, the availability of a network connection, and the availability of a peripheral.

4. A data processing device according to any preceding claim comprising one of a telephone, mobile telephone, cordless telephone, personal digital assistant, palmtop computer, digital still or video camera, media player, television, satellite television terminal, cable television terminal, in-car information system, in-car entertainment system, printer, scanner, facsimile machine and data storage device.

5. A data processing device according to any preceding claim wherein the reveal process displays visual representations of data associated with the first primary menu item.

6. A data processing device according to any preceding claim wherein the user interface includes a highlighting process for visually indicating the successful navigation to at least one of a primary menu item and a secondary menu item.

7. A data processing device according to claim 6 comprising a double reveal process for displaying, within the visual field of the first primary menu item, additional information associated with a first of the plurality of secondary menu items in response to the highlighting of the first of the plurality of secondary menu items.

8. A data processing device according to claim 6 or claim 7, wherein the highlighting process indicates the successful navigation to the first primary menu item by expanding the visual field of the first primary menu item and scaling at least one of a graphic object and a text object displayed within the scaled visual field.

9. A data processing device according to any one of claims 6 to 8 , wherein the data processing device includes a select control and the user interface includes a select process, the select process accepting the selection, when highlighted, of one of a primary menu item and a secondary menu item in response to use of said select control.

10. A data processing device according to claim 9, comprising a first function associated with the first primary menu item, and wherein selecting the first primary menu item with the select control initiates the performance of the first function.

11. A data processing device according to claim 9 or claim 10 wherein the select process, in response to a selection of a primary menu item, initiates an animated zoom transition sequence including a scaling of the selection and an at least partial replacement of the first plurality of primary menu items with a second plurality of primary menu items.

12. A data processing device according to any one of claims 9 to 11, wherein:
said direction control includes a four-way rocker having left, right, up and down actuators providing said direction control;
said select control includes an actuator located between the left, right, up and down actuators; and
wherein the data processing device includes a dedicated deselect control actuator having a visual indication of a functional link to the select control.

13. A data processing device according to claim 12 wherein said select and deselect controls are disposed adjacent to each other on the data processing device and said plurality of directional switches are substantially circumferentially disposed around said select and deselect controls.

14. A data processing device according to claim 9, wherein the data processing device includes a deselect control and the user interface includes a deselect process.

15. A data processing device according to claim 14 wherein the select control provides navigation downwards through a plurality of levels of menu items and the deselect control provides navigation upwards through the plurality of levels of menu items.

16. A data processing device according to claim 14 or claim 15 wherein the deselect control is dedicated to the deselect process.

17. A data processing device according to claim 1 wherein the user interface comprises:
a select control;
a deselect control;
a zoom-in process responsive to the select control for accessing content available in the menu system; and
a zoom-out process responsive to the deselect control for closing accessed content.

18. A data processing device according to claim 1, comprising a select control having a visual indication of functional association with a deselect control.

19. A data processing device according to claim 18 wherein the visual indication comprises a pigment.

20. A data processing device according to claim 18 wherein the visual indication comprises a topographical feature of the data processing device.

21. A data processing device according to any one of claims 9 to 20, wherein the select control is substantially surrounded by directional controls.

22. A data processing device according to claim 21, wherein the select control and a deselect control are substantially surrounded by directional controls.

23. A data processing device according to any preceding claim,wherein the device comprises executable code including a multimedia player.

24. A data processing device according to claim 23 comprising an interactive multimedia work storing graphical data corresponding to the primary and secondary menu items as multimedia segments, wherein the data processing device presents the interactive multimedia work using the multimedia player.

25. A data processing device according to claim 12 wherein the direction control, the select control, and the deselect control provide for geographic navigation of the menu system.

26. A data processing device according to claim 25 wherein the geographic navigation of the menu system is consistent among the majority of the menu levels in the menu system.

27. A data processing device according to claim 25 wherein the geographic navigation of the menu system is consistent among all menu levels in the menu system.

28. A data processing device according to any preceding claim wherein said reveal process displays, within the visual field of the first primary menu item, the first plurality of secondary menu items associated with the first primary menu item, in response to said navigation to the first primary menu item, while continuing to display the remainder of the first plurality of primary menu items.
